# EUROPEAN PATENT APPLICATION

(11) **EP 1 871 098 A2**
(43) Date of publication of application: **26.12.2007**
(21) Application number: 07001182.0
(22) Date of filing: 19.01.2007
(51) Int. Cl.: H04N 5/44

(54) **Processing of removable media that stores full frame video & sub-frame metadata**

(30) Priority: 23.06.2006 US 474032; 20.07.2006 US 491050; 20.07.2006 US 491051; 20.07.2006 US 491019; 18.08.2006 US 506662
(71) Applicant: Broadcom Corporation, Irvine, CA 92617 (US)
(72) Inventor: Bennett, James D., 92672 San Clemente, CA (US)
(74) Representative: Jehle, Volker Armin

(57) **Abstract**

A removable storage media is received by and interacts with both a first video player system and a second video player system. The first video player system has a first video display that has a first display characteristic and the second video player system has a second video display that has a second display characteristic, the first display characteristic being different from the second display characteristic. The removable storage media includes a plurality of storage locations and stores a sequence of full frames of video data, first sub-frame metadata, and second sub-frame metadata. The first sub-frame metadata is generated and the second sub-frame metadata are used to process the full frames of video data to correspond to the first video display and the second video display, respectively.

## Description

### CROSS REFERENCES TO RELATED APPLICATIONS

The present application is a continuation-in-part of:
1. Utility Application Serial No. 11/474,032 filed on June 23, 2006, and entitled "VIDEO PROCESSING SYSTEM THAT GENERATES SUB-FRAME METADATA," (BP5273);
2. Utility Application Serial No. 11/491,050 filed on July 20, 2006, and entitled "ADAPTIVE VIDEO PROCESSING CIRCUITRY & PLAYER USING SUB-FRAME METADATA" (BP5446);
3. Utility Application Serial No. 11/491,051 filed on July 20, 2006, and entitled "ADAPTIVE VIDEO PROCESSING USING SUB-FRAME METADATA" (BP5447); and
4. Utility Application Serial No. 11/491,019 filed on July 20, 2006, and entitled "SIMULTANEOUS VIDEO AND SUB-FRAME METADATA CAPTURE SYSTEM" (BP5448), all of which are incorporated herein by reference for all purposes.

The present application is related to Utility Application Serial No. 11/xxx,xxx, filed on even data herewith and entitled "SUB-FRAME METADATA DISTRIBUTION SERVER" (BP5555), which is incorporated herein by reference for all purposes.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### 1. TECHNICAL FIELD OF THE INVENTION

This invention is related generally to video processing devices, and more particularly to the preparation of video information to be displayed on a video player.

### 2. DESCRIPTION OF RELATED ART

Movies and other video content are often captured using 35 mm film with a 16:9 aspect ratio. When a movie enters the primary movie market, the 35 mm film is reproduced and distributed to various movie theatres for sale of the movie to movie viewers. For example, movie theatres typically project the movie on a "big-screen" to an audience of paying viewers by sending high lumen light through the 35 mm film. Once a movie has left the "big-screen," the movie often enters a secondary market, in which distribution is accomplished by the sale of video discs or tapes (e.g., VHS tapes, DVD's, high-definition (HD)-DVD's, Blue-ray DVD's, and other recording mediums) containing the movie to individual viewers. Other options for secondary market distribution of the movie include download via the Internet and broadcasting by television network providers.

For distribution via the secondary market, the 35 mm film content is translated film frame by film frame into raw digital video. For HD resolution requiring at least 1920x1080 pixels per film frame, such raw digital video would require about 25 GB of storage for a two-hour movie. To avoid such storage requirements, encoders are typically applied to encode and compress the raw digital video, significantly reducing the storage requirements. Examples of encoding standards include, but are not limited to, Motion Pictures Expert Group (MPEG)-1, MPEG-2, MPEG-2-enhanced for HD, MPEG-4 AVC, H.261, H.263 and Society of Motion Picture and Television Engineers (SMPTE) VC-1.

To accommodate the demand for displaying movies on telephones, personal digital assistants (PDAs) and other handheld devices, compressed digital video data is typically downloaded via the Internet or otherwise uploaded or stored on the handheld device, and the handheld device decompresses and decodes the video data for display to a user on a video display associated with the handheld device. However, the size of such handheld devices typically restricts the size of the video display (screen) on the handheld device. For example, small screens on handheld devices are often sized just over two (2) inches diagonal. By comparison, televisions often have screens with a diagonal measurement of thirty to sixty inches or more. This difference in screen size has a profound affect on the viewer's perceived image quality.

For example, typical, conventional PDA's and high-end telephones have width to height screen ratios of the human eye. On a small screen, the human eye often fails to perceive small details, such as text, facial features, and distant objects. For example, in the movie theatre, a viewer of a panoramic scene that contains a distant actor and a roadway sign might easily be able to identify facial expressions and read the sign's text. On an HD television screen, such perception might also be possible. However, when translated to a small screen of a handheld device, perceiving the facial expressions and text often proves impossible due to limitations of the human eye.

Screen resolution is limited if not by technology then by the human eye no matter what the size screen. On a small screen however, such limitations have the greatest impact. For example, typical, conventional PDA's and high-end telephones have width to height screen ratios of 4:3 and are often capable of displaying QVGA video at a resolution of 320x240 pixels. By contrast, HD televisions typically have screen ratios of 16:9 and are capable of displaying resolutions up to 1920x 1080 pixels. In the process of converting HD video to fit the far lesser number of pixels of the smaller screen, pixel data is combined and details are effectively lost. An attempt to increase the number of pixels on the smaller screen to that of an HD television might avoid the conversion process, but, as mentioned previously, the human eye will impose its own limitations and details will still be lost.

Video transcoding and editing systems are typically used to convert video from one format and resolution to another for playback on a particular screen. For example, such systems might input DVD video and, after performing a conversion process, output video that will be played back on a QVGA screen. Interactive editing functionality might also be employed along with the conversion process to produce an edited and converted output video. To support a variety of different screen sizes, resolutions and encoding standards, multiple output video streams or files must be generated.

Video is usually captured in the "big-screen" format, which server well for theatre viewing. Because this video is later transcoded, the "big-screen" format video may not adequately support conversion to smaller screen sizes. In such case, no conversion process will produce suitable video for display on small screens. Further limitations and disadvantages of conventional and traditional approaches will become apparent to one of ordinary skill in the art through comparison of such systems with various aspects of the present invention.

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, a removable storage media is provided that may be received by and interact with both a first video player system and a second video player system, the first video player system having a first video display that has a first display characteristic, the second video player system having a second video display that has a second display characteristic, the first display characteristic being different from the second display characteristic, the removable storage media comprising:
a plurality of storage locations;
a sequence of full frames of video data stored in at least a first of the plurality of storage locations;
first sub-frame metadata, generated to accommodate at least the first display characteristic, that is stored in at least a second of the plurality of storage locations;
the first sub-frame metadata defines a first plurality of sub-frames within the sequence of full frames of video data, each of the first plurality of sub-frames having at least a first parameter that differs from that of the other of the first plurality of sub-frames;
second sub-frame metadata, generated to accommodate at least the second display characteristic, that is stored in at least a third of the plurality of storage locations; and
the second sub-frame metadata defines a second plurality of sub-frames within the sequence of full frames of video data, each of the second plurality of sub-frames having at least a second parameter that differs from that of the other of the second plurality of sub-frames.

Advantageously:
the first sub-frame metadata can be retrieved and used by the first video player system to tailor the sequence of full frames of video data for the first display; and
the second frame metadata can be retrieved and used by the second video player system to tailor the sequence of full frames of video data for the second display.

Advantageously:
the first parameter comprising a sub-frame center point within the sequence of full frames of video data.

Advantageously:
the first video player system comprising a television, and the second video player system comprising a computer.

Advantageously:
the first video display comprising a display of a hand-held device.

Advantageously:
the storage media comprises a video disk.

Advantageously:
the storage media comprises random access memory.

Advantageously:
the storage media comprises read only memory.

Advantageously, the removable storage media further comprises digital rights management data in at least a fourth of the plurality of storage locations, the digital rights management data relating to the sequence of full frames of video data.

Advantageously, the removable storage media further comprises digital rights management data in at least a fourth of the plurality of storage locations, the digital rights management data relating to the first sub-frame metadata.

Advantageously, the removable storage media further comprises:
audio data corresponding to the sequence of full frames of video data;
first sub-frame audio data corresponding to the first plurality of sub-frames; and
second sub-frame audio data corresponding to the second plurality of sub-frames.

Advantageously, the first display characteristic comprising a first image resolution and the second display characteristic comprising a second image resolution.

Advantageously, the first display characteristic comprising a first diagonal dimension, the second display characteristic comprising a second diagonal dimension, and the first diagonal dimension being substantially greater than the second diagonal dimension.

Advantageously, the sequence of full frames of video data comprising an encoded sequence of full frames of video data.

According to an aspect of the invention, video player circuitry comprises:
media interface that receives a removable media, the removable media having stored thereon both full frame video and a plurality of sub-frame metadata;
interface circuitry communicatively coupled to a display having at least one display characteristic;
processing circuitry that selects first sub-frame metadata from the plurality of sub-frame metadata based upon the at least one display characteristic;
the processing circuitry generates tailored video from the full frame video using the first sub-frame metadata; and
the processing circuitry delivers the tailored video via the interface circuitry.

Advantageously, the processing circuitry performs post-processing pursuant to supplemental information as part of the generation of the tailored video.

Advantageously, the video player circuitry and the display are disposed in a single housing.

Advantageously, the video player circuitry is disposed in a first housing and the display is disposed in a second housing.

Advantageously, the video player circuitry further comprises decoder circuitry operable to decode the full frame video.

Advantageously, the full frame video has a first resolution and the tailored video has a second resolution that is less than the first resolution.

Advantageously, the full frame video has a first aspect ratio and the tailored video has a second aspect ratio that differs from the first aspect ratio.

Advantageously, at least a portion of the processing circuitry comprises general purpose processing circuitry that performs underlying functionality pursuant to program code.

According to an aspect of the invention, a method is provided associated with a removable storage media, the method comprising:
storing first data representing a full screen video sequence;
storing second data representing first sub-frame metadata, the second data for use in producing first tailored video from the first data, the first sub-frame metadata defining both a first sub-frame within the full screen video sequence and a second sub-frame with the full screen video sequence, the first sub-frame having at least one characteristic that differs from that of the second sub-frame; and
storing third data representing second sub-frame metadata, the third data for use in producing second tailored video from the first data.

Advantageously, the method further comprises distributing the removable storage media.

Advantageously, the first data is encoded.

Advantageously, the method further comprises coupling the removable media to a video player system.

Advantageously, the method further comprises storing fourth data relating to digital rights management.

Various features and advantages of the present invention will become apparent from the following detailed description of the invention made with reference to the accompanying drawings.

### BRIEF DESCRIPTION OF THE SEVERAL VIEWS OF THE DRAWINGS

FIG. 1 is a system diagram illustrating a plurality of video player systems and a storage media constructed according to embodiments of the present invention;
FIG. 2 is a block diagram illustrating a video player system, storage media, and a plurality of distribution servers constructed according to embodiments of the present invention;
FIG. 3 is a system diagram illustrating a communication infrastructure including a plurality of video player systems, a plurality of distribution servers, and additional servers according to embodiments of the present invention;
FIG. 4 is a system diagram illustrating a video capture/sub-frame metadata generation system constructed according to an embodiment of the present invention;
FIG. 5 is a diagram illustrating exemplary original video frames and corresponding sub-frames;
FIG. 6 is a diagram illustrating an embodiment of a video processing system display providing a graphical user interface that contains video editing tools for creating sub-frames;
FIG. 7 is a diagram illustrating exemplary original video frames and corresponding sub-frames;
FIG. 8 is a chart illustrating exemplary sub-frame metadata for a sequence of sub-frames;
FIG. 9A is a chart illustrating exemplary sub-frame metadata including editing information for a sub-frame;
FIG. 9B is a block diagram illustrating a removable storage media constructed according to an embodiment of the present invention;
FIG. 10 is a block diagram illustrating a video player system constructed according to an embodiment of the present invention;
FIG. 11 is a block diagram illustrating a video player system constructed according to an embodiment of the present invention;
FIG. 12 is a schematic block diagram illustrating a first embodiment of a distributed video player system according to the present invention;
FIG. 13 is a schematic block diagram illustrating a second embodiment of a distributed video player system according to the present invention;
FIG. 14 is a schematic block diagram illustrating a third embodiment of a distributed video player system according to the present invention;
FIG. 15 is a schematic block diagram illustrating a fourth embodiment of a distributed video player system according to the present invention;
FIG. 16 is a system diagram illustrating techniques for transferring video data, metadata, and other information within a distributed video player system according to the present invention;
FIG. 17 is a flow chart illustrating a process for video processing and playback according to an embodiment of the present invention; and
FIG. 18 is a flow chart illustrating a method associated with a removable storage media according to an embodiment of the present invention.

### DETAILED DESCRIPTION OF THE INVENTION

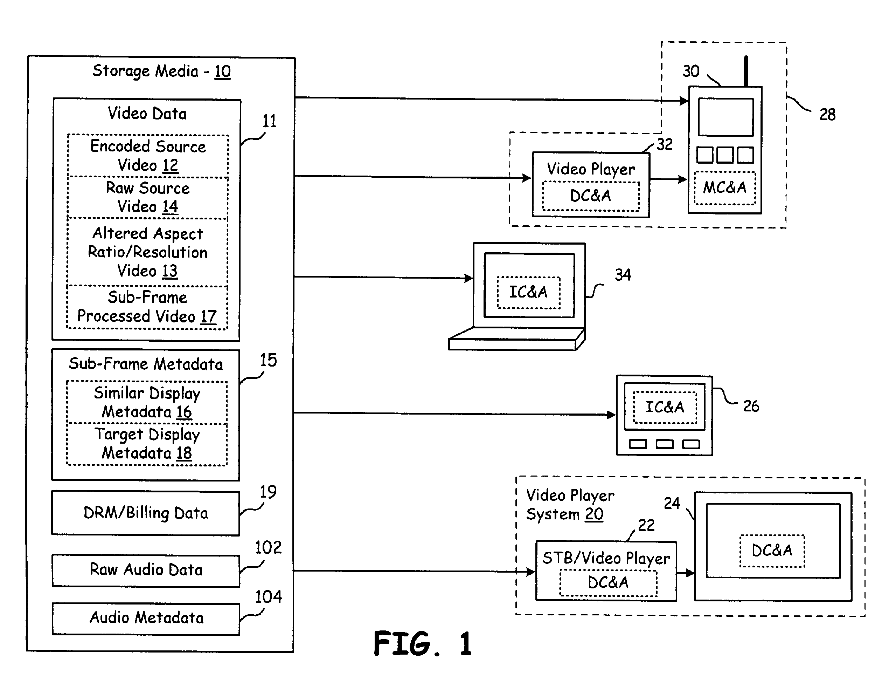

FIG. 1 is a system diagram illustrating a plurality of video player systems and a storage media constructed according to embodiments of the present invention. A storage media 10 constructed according to the present invention may be a CD ROM, a DVD ROM, electronic RAM, magnetic RAM, ROM, or another type of storage device that stores data and that may be used by a digital computer. The storage media 10 may support any current or contemplated video format such as HD-DVD format(s), DVD format(s), magnetic tape format(s), BLU-RAY DVD format(s), RAM format(s), ROM format(s), or other format(s) that enables storage of data. The storage media 10 is transportable and, as will be further described herein, may be communicatively attached to a digital computer. A wired link, a wireless link, a media drive, or another attachment technique may be employed so that the digital computer reads data from (and writes data to) the storage media 10.

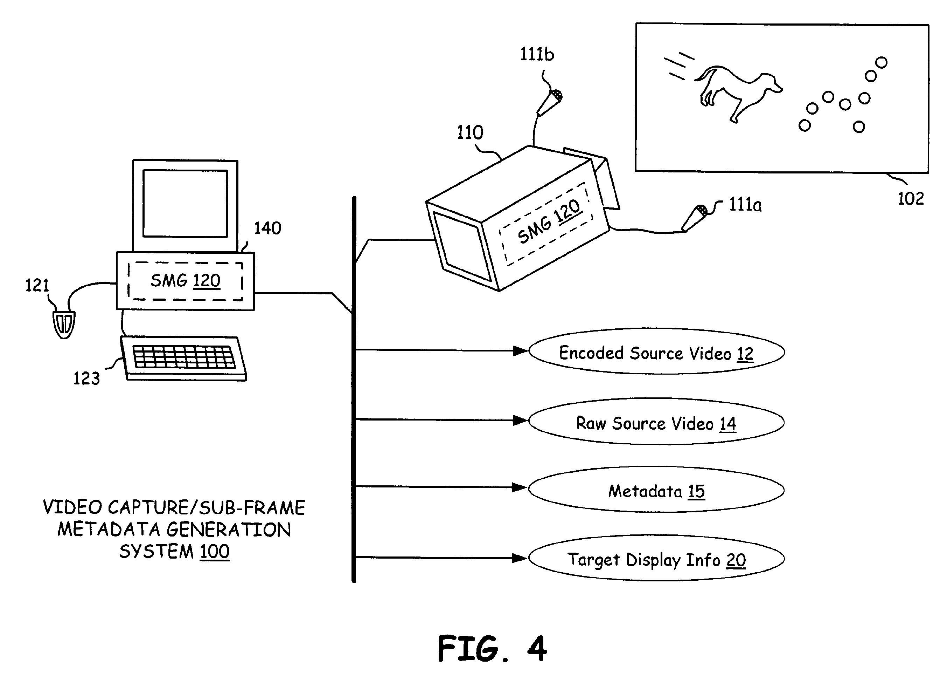

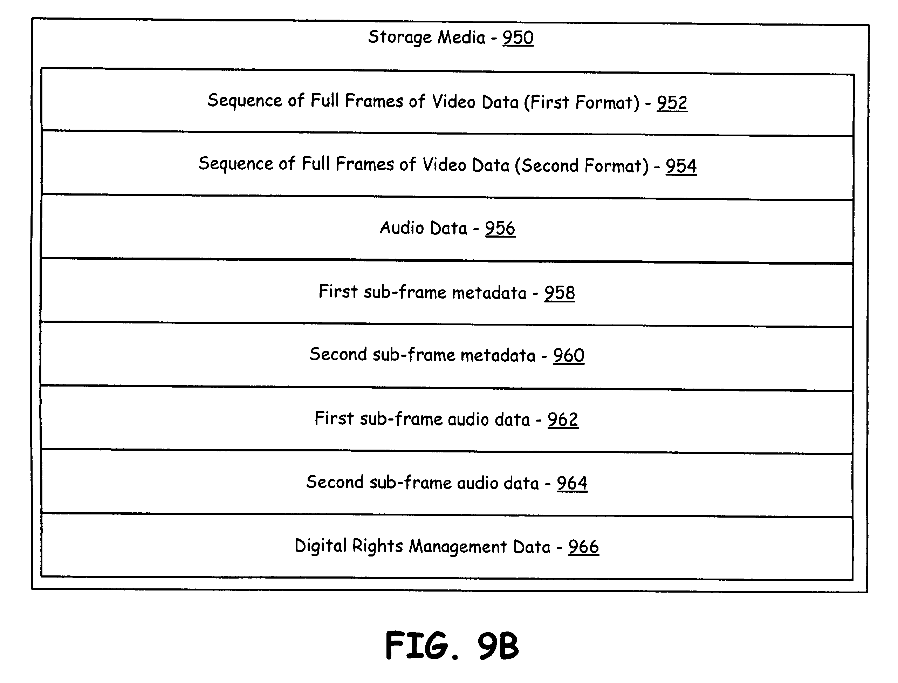

The storage media 10 stores video 11, sub-frame metadata 15, digital rights management (DRM)/billing data 19, raw audio data 102, and audio metadata 104. The structure and contents of the storage media 10 will be described further herein with reference to FIG. 9B. The video 11 includes encoded source video 12, raw source video 14, altered aspect ratio/resolution video 13, and sub-frame processed video 17. The sub-frame metadata 15 includes similar display metadata 16 and target display metadata 18. Sub-frame metadata 15 is used by a video player system 26, 28, 20, or 34 to process the video data 11. The manner in which the sub-frame metadata is created and processed will be described further herein with reference to FIGs. 4 - 18.

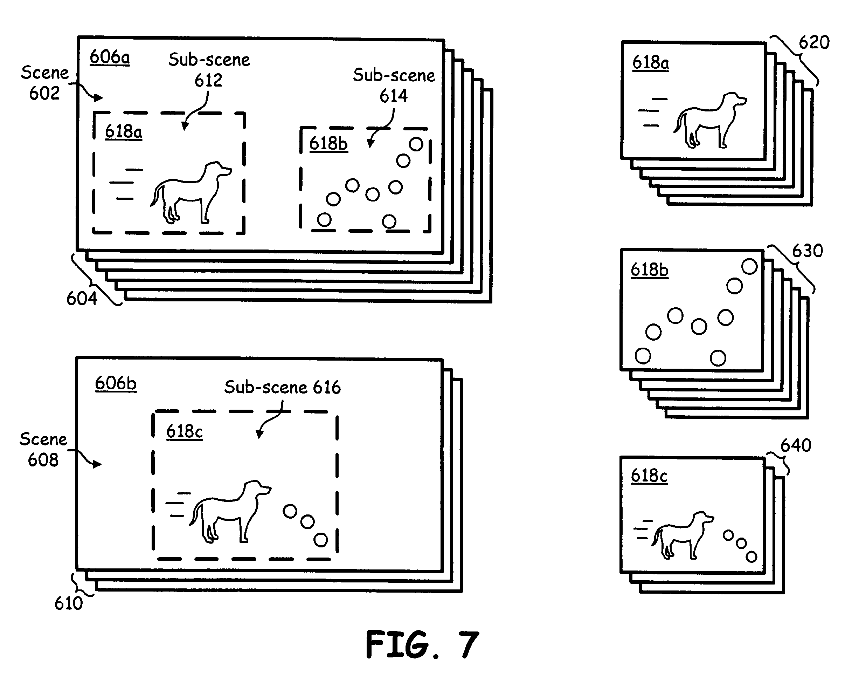

Generally, any of the video players 20, 26, 28, or 34 is operable to receive the storage media 10 in a corresponding media drive or via a corresponding communication link. Each of the video player systems 20, 26, 28, and 34 supports one or more video displays with respective video display characteristics. Because the encoded source video 12 and/or the raw source video 14 has corresponding aspect ratios, resolutions, and other video characteristics that may not correspond to a destination video display, the video player systems 20, 26, 28, and 34 use sub-frame metadata 15 to process the video data 11. The video player systems 20, 26, 28, and 34 process the video data 11 using the sub-frame metadata 15 to produce video data having characteristics that correspond to a target display. The manner in which the video player systems 20, 26, 28, and 34 sub-frame process the video data 11 using the sub-frame metadata 15 will be described further herein with reference to FIGs. 7 and 9 - 18.

The video data 11 stored on the storage media 10 may include multiple formats of one or more media programs, e.g., television shows, movies, MPEG clips, etc. The encoded source video 12 may correspond to the raw source video 14 but be in an encoded format. Alternatively, the encoded source video 12 may be of a different program than that of the raw source video 14. Altered aspect ratio/resolution video 13 may correspond to the same programming as raw source video 14 but be of a differing aspect ratio, resolution, etc., than the raw source video 14. Further, the video data 11 may include sub-frame processed video 17 that has been previously processed using sub-frame metadata. This sub-frame processed video 17 may correspond to a class of displays, one of the classes of displays corresponding to one of the video displays illustrated in FIG. 1. The sub-frame processed video 17 may have an appropriate aspect ratio and resolution for one of the video displays illustrated in FIG. 1.

The sub-frame metadata 15 includes similar display metadata 16 that corresponds to one or more of the displays illustrated in FIG. 1. Generally, the similar display metadata 16, when used to process raw source video 14 for example, produces video data that corresponds to a particular class of displays respective to the similar display metadata 16. Any of the video player systems 20, 26, 28, or 34 of FIG. 1 may process the video data 11 based upon the similar display metadata 16.

The target display metadata 18 of the sub-frame metadata 15 may be employed to process the encoded source video 12, the raw source video 14, the altered aspect ratio/resolution video, or the sub-frame process video 17 to produce video data directed particularly to a destination video display. For example, video player 34 may process the encoded source video 12 based upon the target display metadata 18 to produce video corresponding directly to the video display of the video player system 34. The video data produced by this processing would have an aspect ratio, resolution, and other video characteristics that correspond exactly or substantially to the video display of video player 34.

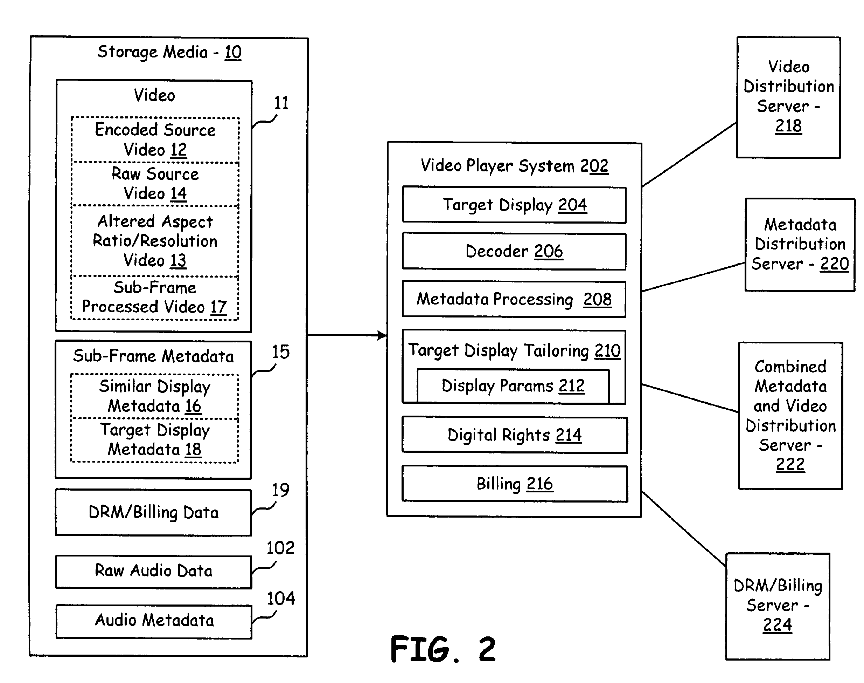

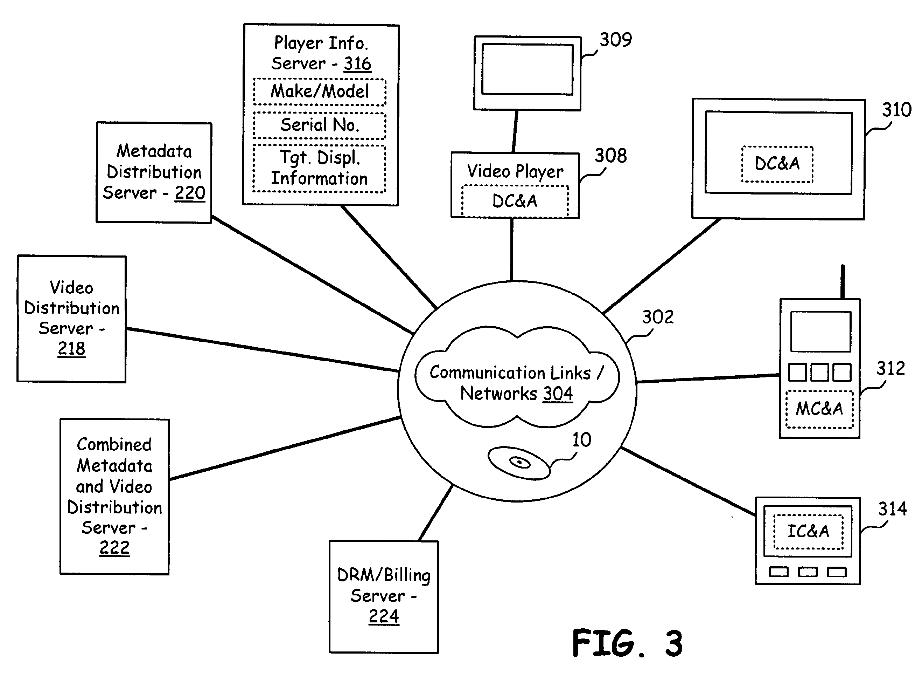

The DRM/billing data 19 of the removable storage media 10 is employed to ensure that a video player system, e.g., video player system 20, has rights to view/use the video data 11 and/or to use the sub-frame metadata 15. As will be further described herein with reference to FIGs. 2 and 3, upon usage of the DRM/billing data 19 via corresponding video player, e.g., video player 26, the video player 26 may interact with a DRM/billing server 224 to first determine whether the video player system 26 has rights to use the video data 11 and/or the sub-frame metadata 15. Secondly, the video player 26, using the DRM/billing data 19, may further implement billing operations in cooperation with the DRM/billing server 224 to ensure that a subscriber pays for usage of the data contained in the storage media 10.

The raw audio data 102 of the storage media 10 may correspond to the video data 11. The raw audio data 102 is stored in an audio format that is usable by any of the video player systems 20, 26, 28, and 34. For example, the raw audio data 10 may be stored in a digital format that any of the video player systems 20, 26, 28, or 34 could use to produce a surround sound presentation for a user. Alternatively, the raw audio data 102 may include multiple formats, one of which is selectable by a video player system 20, 26, 34, or 28 based upon its audio playback characteristics.

Audio metadata 104 is used by video player system 20, 26, 28, or 34 to process the raw audio data 102 consistent with the sub-frame processing of the video data 11 using sub-frame metadata 15. As will be further described herein, sub-frame processing operations alter the sequence of video frames of the video data 11. In order to ensure that the audio track presented to a user corresponds to the processed video, audio metadata 104 is used by video player system 20, 26, 28, or 34 to produce audio corresponding to the processed video. The audio metadata 104 corresponds generally to the sub-frame metadata 15.

As illustrated, the video player systems 20, 26, 28, and 34 of the present invention may be contained within a single device or distributed among multiple devices. The manner in which a video player system of the present invention may be contained within a single device is illustrated by video players 26 and 34. The manner in which a video player system of the present invention is distributed within multiple devices is illustrated by video player systems 20 and 28. Video player system 20 includes video player 22 and video display device 24. Video player system 28 includes video player 32 and video display device 30.

The functionality of the video player systems of FIG. 1 includes generally three types of functionalities. A first type of functionality is multi-mode video circuitry and application (MC&A) functionality. The MC&A functionality may operate in either/both a first mode and a second mode. In a first mode of operation of the MC&A functionality, the video display device 30, for example, receives source video 11 and metadata 15 via a communication link (further described with reference to FIG. 2) or via a storage media 10 such as a DVD. The video display device 30, in the first mode of operation of the MC&A functionality, uses both the source video 11 and the metadata 15 for processing and playback operations resulting in the display of video.

The source video 11 received by video display device 30 may be encoded source video 12 or raw source video 14. The metadata 15 may be similar display metadata 16 or target display metadata 18. Generally, encoded source video 12 and raw source video 14 may have similar content through the former is encoded while the later is not encoded. Generally, source video 11 includes a sequence of full-frames of video data such that may be captured by a video camera. Metadata 15 is additional information that is used in video processing operations to modify the sequence of full frame of video data particularly to produce video for play back on a target video display of a target video player. The manner in which metadata 15 is created and its relationship to the source video 11 will be described further with reference to FIG. 4 through FIG. 9A.

With the MC&A first mode operations, video display device 30 uses the source video 11 and metadata 15 in combination to produce an output for its video display. Generally, similar display metadata 16 has attributes tailored to a class or group of targeted video players. The target video players within this class or group may have similar screen resolution, similar aspect radios, or other similar characteristics that lend well to modifying source video to produce modified source video for presentation on video displays of the class of video players. Alternatively, the target display metadata 18 includes information unique to a make/model/type of video player. When a video player, e.g. video display device 30, uses the target display metadata 18 for modification of the source video 11, the modified video is particularly tailored to the video display of the video display device 30.

In the second mode of operation of the MC&A functionality of the video player system of the present invention, the video display device 30 receives and displays video (encoded video or raw video) that has been processed previously using metadata 15 by another video player 32. For example, with the video player system 28, video player 32 has previously processed the source video 11 using the metadata 15 to produce an output to video display device 30. With this second mode of operation of the MC&A functionality, the video display device 30 receives the output of video player 32 for presentation, and presents such output on its video display. The MC&A functionality of the video display device 30 may further modify the video data received from the video player 32.

Another functionality employed by one or more of the video player systems 26 and/or 34 of FIG. 1 includes Integrated Video Circuitry and Application functionality (IC&A). The IC&A functionality of the video player systems 26 and 34 of FIG. 1 receives source video 11 and metadata 15 and processes the source video 11 and the metadata 15 to produce video output for display on a corresponding video player 34, for example. Each of the video player systems 34 and 36 receives both the source video 11 and the metadata 15 via corresponding communication links and its IC&A functionality processes the source video 11 and metadata 15 to produce video for display on the video display of the corresponding video player systems 26 and 34.

According to another aspect of FIG. 1, a video player system may include Distributed video Circuitry and Application (DC&A) functionality. The DC&A functionality associated with video player 32 receives source video 11 and metadata 15 and produces sub-frame video data by processing of the source video 11 in conjunction with the metadata 15. The DC&A functionality of video players 22 and 32 present outputs to corresponding video display devices 24 and 30, respectively. The corresponding video players 24 and 30, using their respective functionality, may further modify the received video inputs and then present video upon their respective displays.

Depending on the particular implementation and the particular operations of the video player systems of FIG. 1, their functions may be distributed among multiple devices. For example, video player system 20, video player 22, and video display device 24 all includes DC&A functionality. The distributed DC&A functionality may be configured in various operations to share processing duties that either or both could perform. Further, the video player system 28, video player 32, and video display device 30 may share processing functions that change from time to time based upon particular current configuration of the video player system 28.

FIG. 2 is a block diagram illustrating a video player system, storage media, and a plurality of distribution servers constructed according to embodiments of the present invention. The video player system 202 illustrated in FIG. 2 includes functional components that are implemented in hardware, software, or a combination of hardware and software. Video player system 202 includes a target display 204, a decoder 206, metadata processing circuitry 208, target display tailoring circuitry 210, digital rights circuitry 214, and billing circuitry 216. The video player system 202 extracts source video 11 that includes one or both of encoded sources video 12 and raw source video 14. The Video player system 202 further receives metadata 15 that includes one or more of similar display metadata 15 and target display metadata 18. Generally, the target display 204 of video player system 202 displays output that is produced by either metadata processing circuitry 208 or target display tailoring circuitry 48.

The storage media 10 of FIG. 2 is the same or substantially equivalent to the storage media 10 of FIG. 1 and may be received by video player system 202 in a corresponding media drive and/or communicatively coupled to the video player system 202 via one or more communication links. The media drive of the video player system 202 may be internal to the video player system 202. Alternatively, the media drive may be an external media drive that communicates with video player system 202 via a communication link. Storage media 10 may simply be a storage device having a universal serial bus (USB) communication interface to video player system 202. Further, the storage media 10 may be accessible via a wireless interface by video player system 202. In any case, video player system 202 is operable to access any of the video 11, the sub-frame metadata 15, the DRM/billing data 19, the raw audio data 102, and the audio metadata 104 of the storage media 10.

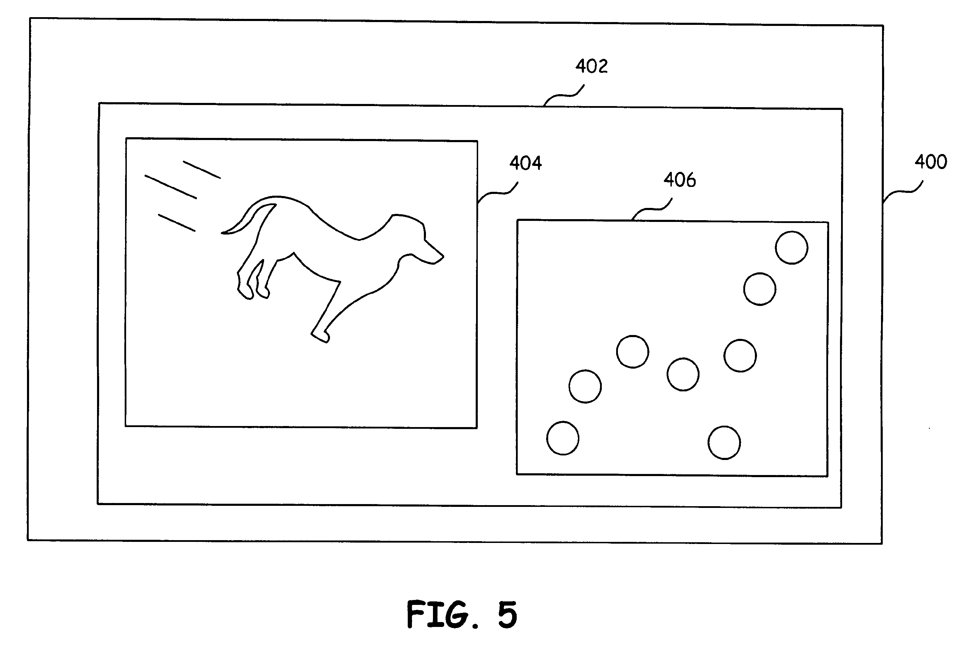

Decoder 206 is operable to receive and decode encoded source video 12 to produce a sequence of full frames of video data. Metadata processing circuitry 208 is operable to receive a sequence of full frame of video data received from decoder 44. Alternately, the metadata processing circuitry 208 is operable to receive a sequence of full frames of video data directly as raw source video 14. In either case, the metadata processing circuitry 208 is operable to process the sequence of full frames of video data based upon metadata 15 (either similar display metadata 16 or target display metadata 18). Generally, based upon the metadata 15, the metadata processing circuitry 208 is operable to generate a plurality of sequences of sub-frames of video data from the sequence of full-frame and video data. In one operation, a first sequence of the plurality of sequences of sub-frames of video data has a different center point within the sequence of full frame of video data than that of a second sequence of the plurality of sequences of sub-frames of video data. These concepts will be described further with reference to FIGs. 5 through 9.

The video player system 202 communicatively couples to video distribution server 218, metadata distribution server 220, combined metadata and video distribution server 222, and DRM/billing server 224. The structure and operations of the servers 218, 220, 222, and 224 are described further with reference to co-pending patent application entitled SUB-FRAME METADATA DISTRIBUTION SERVER, filed on even date herewith, and referenced above.

Generally, video player system 202 accesses video 11 and/or sub-frame data 15 from storage media 10. However, based upon its interaction with storage media 10, the video player system 202 may determine that better versions that are more tailored to the target display 204 of the video player system 202 are available at servers 218, 220, or 222. In one particular example of this operation, video player system 202, based upon information extracted from storage media 10, is able to access video distribution server 218 to receive sub-frame processed video corresponding exactly to target display 204. Further, in another operation, video player system 202, based upon interaction with storage media 10 and access of data contained thereon, determines that target display metadata corresponding to target display 204 is available from metadata distribution server 220. Because the video player system 202 performs DRM/billing operations based upon DRM/billing data 19 of the storage media 10, video player system 202 has access to metadata distribution server 220 to receive target display metadata there from. Similar operations may be performed in conjunction with the combined metadata and video distribution server 222. Video player system 202 may perform its DRM/billing operations in cooperation with the DRM/billing server 224 and based upon DRM/billing data 19 read from storage media 10.

The target display tailoring circuitry 210 may perform post-processing operations pursuant to supplemental information such as target display parameters 212 to modify the plurality of sequences of sub-frames of video data to produce an output. The output of the target display tailoring circuitry 210 is then displayed on target display 42. When the target displayer tailoring circuitry 210 is not used to perform post-processing of the plurality of sequences of sub-frames of video data, the output of metadata processing 208 is provided directly to the target display 42.

Digital rights circuitry 214 of the video player system 202 is employed to determine whether or not the video player system 202 has rights to use/modify source video 11 and/or metadata 15 and/or to produce video for display based thereupon on the target display 42. The digital rights circuitry 214 may interact with a remote server or other commuting systems in determining whether such digital rights exist. However, the digital rights circuitry 214 may simply look at portions of the source video 11 and or the metadata 15 to determine whether the video player system 202 has rights to operate upon such. Billing circuitry 216 of the video player system 202 operates to produce a billing record locally or remotely to cause billing for usage of the source video 11 and or the metadata 15. The billing circuitry 216 may operate in conjunction with a remote server or servers in initiating such billing record generation.

FIG. 3 is a system diagram illustrating a communication infrastructure including a plurality of video player systems, a plurality of distribution servers, and additional servers according to embodiments of the present invention. Generally, the source video 11 and the metadata 15 are transferred to video player systems 308, 310, 320, and 314 via communication links/networks 304 or storage media 10. The communication links/networks 304 may include one or more of the Internet, Local Area Networks (LANs), Wireless Local Area Networks (WLANs), Wide Area Networks (WANs), the telephone network, cable modem networks, satellite communication networks, Worldwide Interoperability for Microwave Access (WiMAX) networks, and/or other wired and/or wireless communication links.

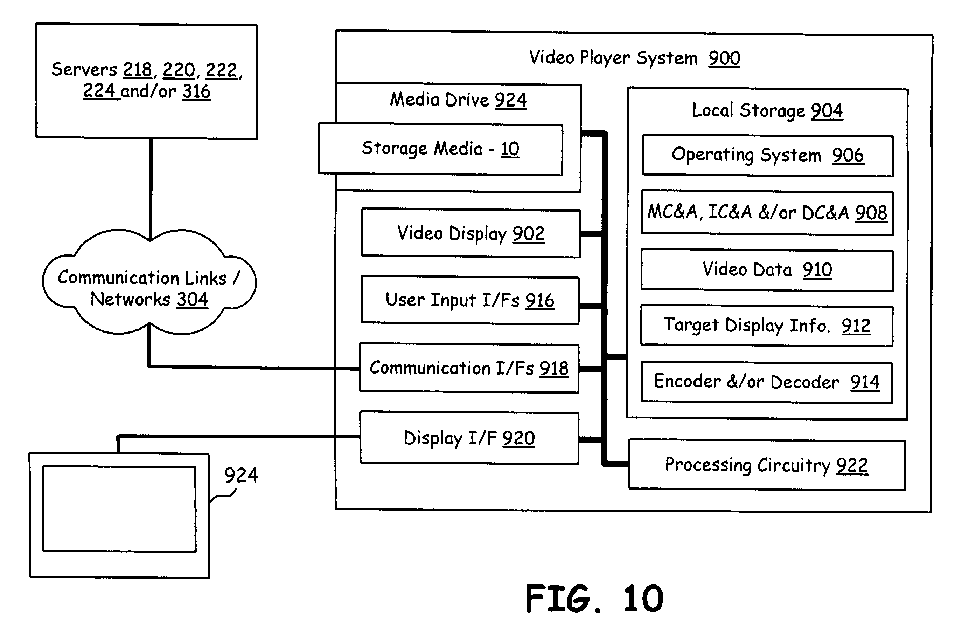

When the source video 11 and/or metadata 15 is contained in the storage media 10, a corresponding video player system 308 , 310, 312, or 314 receives the storage media 10 within a media drive and reads the media 10 using a media drive. As it shown, the various types of circuitry and application functionality DC&A, MC&A, and IC&A, previously described with reference to FIG. 1, are implemented by the video player systems 308, 310, 312, and 314. As will be described further with reference to FIGs. 10 through 16, the functionality of these circuitries/applications may be distributed across multiple devices.

Any of the video player systems 308, 310, 312, or 314 may receive all required video data 11 and sub-frame metadata 15 from the storage media 10. Alternatively, only a portion of required video data and/or metadata is received from storage media 10. In such case, a video player system, e.g., video player system 308 may access any of metadata distribution server 220, video distribution server 218, and/or combined metadata and video distribution server 222 to receive video data or metadata that is not available on storage media 10. However, with these operations, video player 308 would first access storage media 10 and then later determine that is should access one of the servers 218, 220, or 222 for video data or metadata not available in storage media 10. The video player 308 would interact with DRM/billing server 224 to determine that it has access not only to the storage media 10 for playback but to any of the servers 218, 220, or 222.

When the video player system does not service a combined video display, the video player system, e.g., 308, may access player information server 316 to retrieve additional information regarding its serviced video display 309. Based upon the access of the player information server 316, based upon the make/model or serial number of serviced video display 309, the video player system 308 receives target display information that it may use in its sub-frame metadata processing operations and/or video data tailoring operations. All these operations will be described further herein with reference to FIGs. 4 - 18.

FIG. 4 is a system diagram illustrating a video capture/sub-frame metadata generation system constructed according to an embodiment of the present invention. The video capture/sub-frame metadata system 100 of FIG. 4 includes a camera 110 and an SMG system 120. The video camera 110 captures an original sequence of full frames of video data relating to scene 102. The video camera 110 may also capture audio via microphones 111A and 111B. The video camera 110 may provide the full frames of video data to console 140 or may execute the SMG system 120. The SMG system 120 of the video camera 110 or console 140 receives input from a user via user input device 121 or 123. Based upon this user input, the SMG system 120 displays one or more sub frames upon a video display that also illustrates the sequence of full frames of video data. Based upon the sub frames created from user input and additional information, the SMG system 120 creates metadata 15. The video data output of the video capture/sub frame metadata generation system 100 is one or more of the encoded source video 12 or raw source video 14. The video capture/sub frame metadata generation 100 also outputs metadata 15 that may be similar display metadata 16 and/or target display metadata 18. The video capture/sub-frame metadata generation system 100 may also output target display information 20.

The sequence of original video frames captured by the video camera 110 is of scene 102. The scene 102 may be any type of a scene that is captured by a video camera 110. For example, the scene 102 may be that of a landscape having a relatively large capture area with great detail. Alternatively, the scene 102 may be head shots of actors having dialog with each other. Further, the scene 102 may be an action scene of a dog chasing a ball. The scene 102 type typically changes from time to time during capture of original video frames.

With prior video capture systems, a user operates the camera 110 to capture original video frames of the scene 102 that were optimized for a "big-screen" format. With the present invention, the original video frames will be later converted for eventual presentation by target video players having respective video displays. Because the sub-frame metadata generation system 120 captures differing types of scenes over time, the manner in which the captured video is converted to create sub-frames for viewing on the target video players also changes over time. The "big-screen" format does not always translate well to smaller screen types. Therefore, the sub-frame metadata generation system 120 of the present invention supports the capture of original video frames that, upon conversion to smaller formats, provide high quality video sub-frames for display on one or more video displays of target video players.

The encoded source video 12 may be encoded using one or more of a discrete cosine transform (DCT)-based encoding/compression formats (e.g., MPEG-1, MPEG-2, MPEG-2-enhanced for HD, MPEG-4 AVC, H.261 and H.263), motion vectors are used to construct frame or field-based predictions from neighboring frames or fields by taking into account the inter-frame or inter-field motion that is typically present. As an example, when using an MPEG coding standard, a sequence of original video frames is encoded as a sequence of three different types of frames: "I" frames, "B" frames and "P" frames. "I" frames are intra-coded, while "P" frames and "B" frames are inter-coded. Thus, I-frames are independent, i.e., they can be reconstructed without reference to any other frame, while P-frames and B-frames are dependent, i.e., they depend upon another frame for reconstruction. More specifically, P-frames are forward predicted from the last I-frame or P-frame and B-frames are both forward predicted and backward predicted from the last/next I-frame or P-frame. The sequence of IPB frames is compressed utilizing the DCT to transform NxN blocks of pixel data in an "I", "P" or "B" frame, where N is usually set to 8, into the DCT domain where quantization is more readily performed. Run-length encoding and entropy encoding are then applied to the quantized bitstream to produce a compressed bitstream which has a significantly reduced bit rate than the original uncompressed video data.

FIG. 5 is a diagram illustrating exemplary original video frames and corresponding sub-frames. As is shown, the video display 400 has a viewing area that displays the sequence of original video frames representing the scene 102 of FIG. 4. According to the embodiment of FIG. 5, the SMG system 120 is further operable to respond to additional signals representing user input by presenting, in addition to sub-frame 402, additional sub-frames 404 and 406 on the video display 400 in association with the sequence of original video frames. Each of these sub-frames 402 would have an aspect ratio and size corresponding to one of a plurality of target video displays. Further, the SMG system 120 produces metadata 15 associated with each of these sub-frames 402, 404, and 406. The metadata 15 that the sub-frame metadata generation system 120 generates that is associated with the plurality of sub-frames 402, 404, and 406 enables a corresponding target video display to produce a corresponding presentation on its video display. In the example of FIG. 5, the SMG system 120 includes a single video display 400 upon which each of the plurality of sub-frames 402, 404, and 406 are displayed. In another embodiment, each of the plurality of sub-frames generated by the video processing system may be independently displayed on a corresponding target video player.

With the example of FIG. 5, at least two of the sub-frames 404 and 406 of the set of sub-frames may correspond to a single frame of the sequence of original video frames. Thus, for example, with a particular target video player, sub-frames 404 and 406 and the related video information contained therein may be presented at differing times on a single target video player. With the example of FIG. 5, a first portion of video presented by the target video player may show a dog chasing a ball as contained in sub-frame 404 while a second portion of video presented by the target video player shows the bouncing ball as it is illustrated in sub-frame 406. Thus, with this example, video sequences of a target video player that are adjacent in time are created from a single sequence of original video frames.

Further, with the example of FIG. 5, at least two sub-frames of the set of sub-frames may include an object whose spatial position varies over the sequence of original video frames. In such frames, the spatial position of the sub-frame 404 that identifies the dog would vary over the sequence of original video frames with respect to the sub-frame 406 that indicates the bouncing ball. Further, with the example of FIG. 5, two sub-frames of the set of sub-frames may correspond to at least two different frames of the sequence of original video frames. With this example, sub-frames 404 and 406 may correspond to differing frames of the sequence of original video frames displayed on the video display 400. With this example, during a first time period, sub-frame 404 is selected to display an image of the dog over a period of time. Further, with this example, sub-frames 406 would correspond to a different time period to show the bouncing ball. With this example, at least a portion of the set of sub-frames 404 and 406 may correspond to a sub-scene of a scene depicted across the sequence of original video frames. This sequence depicted may be depicted across the complete display 400 or sub-frame 402.

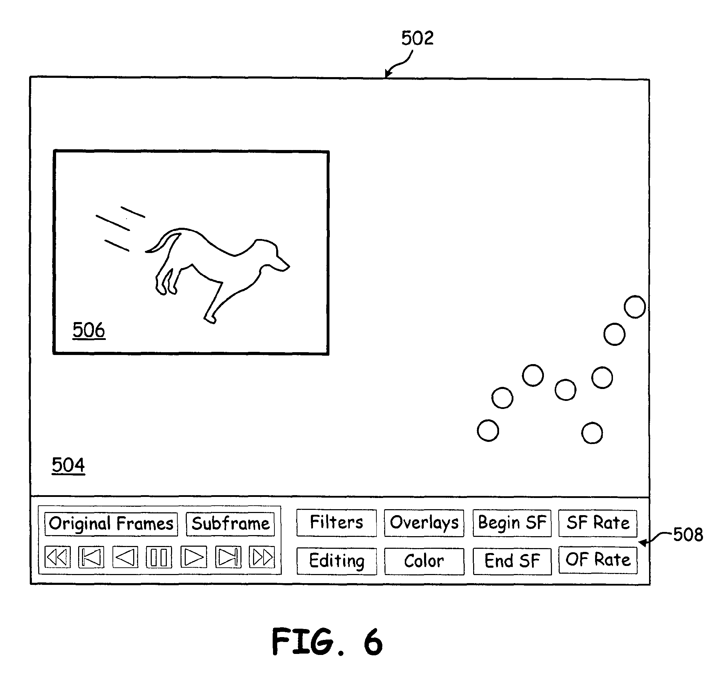

FIG. 6 is a diagram illustrating an embodiment of a video processing system display providing a graphical user interface that contains video editing tools for creating sub-frames. On the video processing display 502 is displayed a current frame 504 and a sub-frame 506 of the current frame 504. The sub-frame 506 includes video data within a region of interest identified by a user. Once the sub-frame 506 has been identified, the user may edit the sub-frame 506 using one or more video editing tools provided to the user via the GUI 508. For example, as shown in FIG. 6, the user may apply filters, color correction, overlays, or other editing tools to the sub-frame 506 by clicking on or otherwise selecting one of the editing tools within the GUI 508. In addition, the GUI 508 may further enable the user to move between original frames and/or sub-frames to view and compare the sequence of original sub-frames to the sequence of sub-frames.

FIG. 7 is a diagram illustrating exemplary original video frames and corresponding sub-frames. In FIG. 7, a first scene 602 is depicted across a first sequence 604 of original video frames 606 and a second scene 608 is depicted across a second sequence 610 of original video frames 606. Thus, each scene 602 and 608 includes a respective sequence 604 and 610 of original video frames 606, and is viewed by sequentially displaying each of the original video frames 606 in the respective sequence 604 and 610 of original video frames 606.

However, to display each of the scenes 602 and 608 on a small video display without reducing the viewer's perceived video quality, each of the scenes 602 and 608 can be divided into sub-scenes that are separately displayed. For example, as shown in FIG. 7, within the first scene 602, there are two sub-scenes 612 and 614, and within the second scene 608, there is one sub-scene 616. Just as each scene 602 and 608 may be viewed by sequentially displaying a respective sequence 604 and 610 of original video frames 606, each sub-scene 612, 614, and 616 may also be viewed by displaying a respective sequence of sub-frames 618 (618a, 618b, and 618c).

For example, looking at the first frame 606a within the first sequence 604 of original video frames, a user can identify two sub-frames 618a and 618b, each containing video data representing a different sub-scene 612 and 614. Assuming the sub-scenes 612 and 614 continue throughout the first sequence 604 of original video frames 606, the user can further identify two sub-frames 618a and 618b, one for each sub-scene 612 and 614, respectively, in each of the subsequent original video frames 606a in the first sequence 604 of original video frames 606. The result is a first sequence 620 of sub-frames 618a, in which each of the sub-frames 618a in the first sequence 620 of sub-frames 618a contains video content representing sub-scene 612, and a second sequence 630 of sub-frames 618b, in which each of the sub-frames 618b in the second sequence 630 of sub-frames 618b contains video content representing sub-scene 614. Each sequence 620 and 630 of sub-frames 618a and 618b can be sequentially displayed. For example, all sub-frames 618a corresponding to the first sub-scene 612 can be displayed sequentially followed by the sequential display of all sub-frames 618b of sequence 630 corresponding to the second sub-scene 614. In this way, the movie retains the logical flow of the scene 602, while allowing a viewer to perceive small details in the scene 602.

Likewise, looking at the first frame 606b within the second sequence 610 of original video frames 606, a user can identify a sub-frame 618c corresponding to sub-scene 616. Again, assuming the sub-scene 616 continues throughout the second sequence 610 of original video frames 606, the user can further identify the sub-frame 618c containing the sub-scene 616 in each of the subsequent original video frames 606 in the second sequence 610 of original video frames 606. The result is a sequence 640 of sub-frames 618c, in which each of the sub-frames 618c in the sequence 640 of sub-frames 618c contains video content representing sub-scene 616.

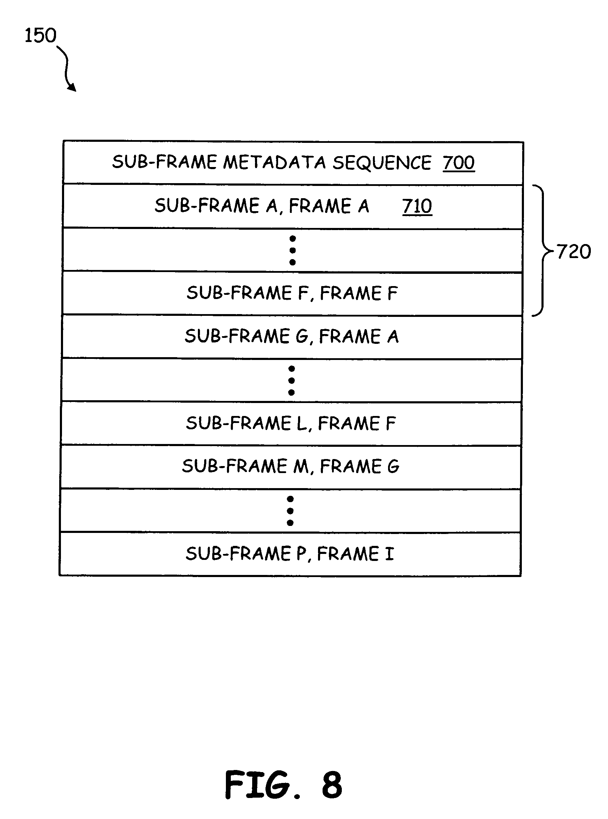

FIG. 8 is a chart illustrating exemplary sub-frame metadata for a sequence of sub-frames. Within the sub-frame metadata 150 shown in FIG. 8 is sequencing metadata 700 that indicates the sequence (i.e., order of display) of the sub-frames. For example, the sequencing metadata 700 can identify a sequence of sub-scenes and a sequence of sub-frames for each sub-scene. Using the example shown in FIG. 8, the sequencing metadata 700 can be divided into groups 720 of sub-frame metadata 150, with each group 720 corresponding to a particular sub-scene.

For example, in the first group 720, the sequencing metadata 700 begins with the first sub-frame (e.g., sub-frame 618a) in the first sequence (e.g., sequence 620) of sub-frames, followed by each additional sub-frame in the first sequence 620. In FIG. 8, the first sub-frame in the first sequence is labeled sub-frame A of original video frame A and the last sub-frame in the first sequence is labeled sub-frame F of original video frame F. After the last sub-frame in the first sequence 620, the sequencing metadata 700 continues with the second group 720, which begins with the first sub-frame (e.g., sub-frame 618b) in the second sequence (e.g., sequence 630) of sub-frames and ends with the last sub-frame in the second sequence 630. In FIG. 8, the first sub-frame in the second sequence is labeled sub-frame G of original video frame A and the last sub-frame in the first sequence is labeled sub-frame L of original video frame F. The final group 720 begins with the first sub-frame (e.g., sub-frame 618c) in the third sequence (e.g., sequence 640) of sub-frames and ends with the last sub-frame in the third sequence 640. In FIG. 8, the first sub-frame in the first sequence is labeled sub-frame M of original video frame G and the last sub-frame in the first sequence is labeled sub-frame P of original video frame I.

Within each group 720 is the sub-frame metadata for each individual sub-frame in the group 720. For example, the first group 720 includes the sub-frame metadata 150 for each of the sub-frames in the first sequence 620 of sub-frames, In an exemplary embodiment, the sub-frame metadata 150 can be organized as a metadata text file containing a number of entries 710. Each entry 710 in the metadata text file includes the sub-frame metadata 150 for a particular sub-frame. Thus, each entry 710 in the metadata text file includes a sub-frame identifier identifying the particular sub-frame associated with the metadata and references one of the frames in the sequence of original video frames.

Examples of editing information include, but are not limited to, a pan direction and pan rate, a zoom rate, a contrast adjustment, a brightness adjustment, a filter parameter, and a video effect parameter. More specifically, associated with a sub-frame, there are several types of editing information that may be applied including those related to: a) visual modification, e.g., brightness, filtering, video effects, contrast and tint adjustments; b) motion information, e.g., panning, acceleration, velocity, direction of sub-frame movement over a sequence of original frames; c) resizing information, e.g., zooming (including zoom in, out and rate) of a sub-frame over a sequence of original frames; and d) supplemental media of any type to be associated, combined or overlaid with those portions of the original video data that falls within the sub-frame (e.g., a text or graphic overlay or supplemental audio.

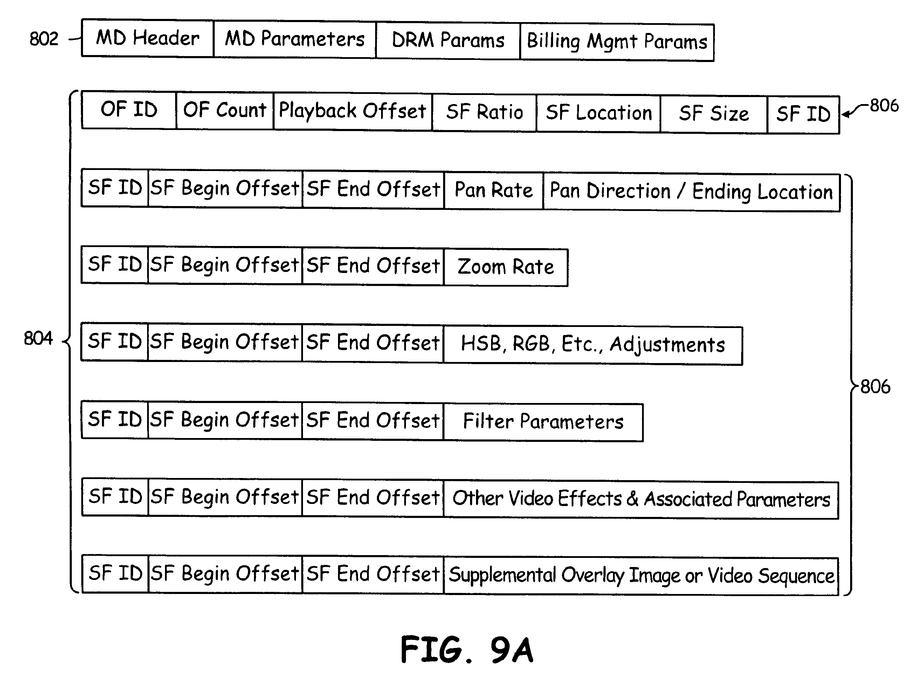

FIG. 9A is a chart illustrating exemplary sub-frame metadata including editing information for a sub-frame. The sub-frame metadata includes a metadata header 802. The metadata header 802 includes metadata parameters, digital rights management parameters, and billing management parameters. The metadata parameters include information regarding the metadata, such as date of creation, date of expiration, creator identification, target video device category/categories, target video device class(es), source video information, and other information that relates generally to all of the metadata. The digital rights management component of the metadata header 802 includes information that is used to determine whether, and to what extent the sub-frame metadata may be used. The billing management parameters of the metadata header 802 include information that may be used to initiate billing operations incurred upon use the metadata.

Sub-frame metadata is found in an entry 804 of the metadata text file. The sub-frame metadata 150 for each sub-frame includes general sub-frame information 806, such as the sub-frame identifier (SF ID) assigned to that sub-frame, information associated with the original video frame (OF ID, OF Count, Playback Offset) from which the sub-frame is taken, the sub-frame location and size (SF Location, SF Size) and the aspect ratio (SF Ratio) of the display on which the sub-frame is to be displayed. In addition, as shown in FIG. 9A, the sub-frame information 804 for a particular sub-frame may include editing information 806 for use in editing the sub-frame. Examples of editing information 806 shown in FIG. 9A include a pan direction and pan rate, a zoom rate, a color adjustment, a filter parameter, a supplemental over image or video sequence and other video effects and associated parameters.

FIG. 9B is a block diagram illustrating a removable storage media constructed according to an embodiment of the present invention. The removable storage media 950 of FIG. 9B includes sequences of full frames of video data 952 and 954. In one embodiment, the storage media 950 stores a single sequence of full frames of video data in a first format 952. However, in other embodiments, the storage media 950 stores multiple formats such as first format and second format of the sequence of full frames of video data 952 and 954, respectively. Storage media 950 also includes audio data 956, first sub-frame metadata 958, second sub-frame metadata 960, first sub-frame audio data 962, second sub-frame audio data 964, and digital rights management data 966.

The storage media 950 may be removable from a media drive. In such case, the storage media 950 may be received by and interact with both a first video player system and the second video player system. As was previously described with reference to FIGs. 1, 2 and 3, the first video player system has a first video display that has first video display characteristics while the second video player system has a second video display with second display characteristics. As was the case with the examples of FIGs. 1, 2, and 3, the first display characteristics would typically be different from the second display characteristics. The removable storage media 950 of FIG. 9B supports these differing video player systems having video displays with different characteristics.

Thus, with the embodiment of FIG. 9B, the storage media 950 includes a plurality of storage locations. The sequence of full frames of video data 952 are stored in at least a first of the plurality of storage locations. Further, first sub-frame metadata 958 is stored in at least a second of a plurality of storage locations. The first sub-frame metadata 958 is generated to accommodate at least the first display characteristic of the first video player system. However, the first sub-frame metadata 958 may accommodate a plurality of other display characteristics. In such case, this first sub-frame metadata 958 would be similar display metadata as compared to target display metadata. However, the first sub-frame metadata 958 may in fact be target display metadata.

The first sub-frame metadata 958 defines a first plurality of sub-frames within the sequence of full frames of video data 952. Each of the first plurality of sub-frames has at least a first parameter that differs from that of the other of the first plurality of sub-frames. The second sub-frame metadata 960 is stored in at least a third of the plurality of storage locations. The second sub-frame metadata 960 is generated to accommodate at least the second display characteristic associated with the second video display of the second video player. The second sub-frame metadata is stored in at least a third of the plurality of storage locations that is generated to accommodate at least the second display characteristic. The second sub-frame metadata 960 assigns a second plurality of sub-frames within the sequence of full frames of video data 952. Each of the second plurality of sub-frames has at least a second parameter that differs from that of the other of the second plurality of sub-frames. The manner in which the first sub-frame metadata 958 and second sub-frame metadata 960 may be used for sub-frame processing operations is described further with reference to FIGs. 10 - 18.

The first sub-frame metadata 958 may be retrieved and used by the first video player system to tailor the sequence of full frames of video data 952 for the first display. Further, the second sub-frame metadata 960 may be retrieved and used by the second video player system and tailor the sequence of full frames of video data 952 for the second display. In considering the differences between the first and second plurality of sub-frames, the first parameter may comprise a sub-frame center point within the sequence of full frames of video data. Thus, for example, video data that is created for the first video display may have different center points than those created for the second video display.

The first sub-frame audio data 962 corresponds to the first sub-frame metadata 958. Thus, after processing of the sequence of full frames of video data 952 based upon the first sub-frame metadata 958, the produced sequence of sub-frames of video data corresponds to the first sub-frame audio data 962. Alternatively, the first sub-frame audio data 962 may be employed to process the audio data 956 so that it corresponds to the corresponding processed sequence of sub-frames. Likewise, the second sub-frame audio data 964 may correspond directly to a processed sequence of sub-frames of video data or may be employed to process audio data 956 to produce processed audio data that corresponds to the sequence of sub-frames of video data.

In considering the differences between the first sequence of sub-frames of video data and the second sub-frames of video data one could consider the differences between the first display characteristics and the second display characteristics. For example, the first display characteristics may have a first resolution while the second display characteristics would have a second image resolution that differs from the first image resolution. Further, the first display characteristics may have a first diagonal dimension while the second display characteristics may have a second diagonal dimension. In such case, the first diagonal dimension may be substantially greater than the second diagonal dimension. In such case, the first sequence of sub-frames of video data and the second sub-frames of video data would have different characteristics that correspond to the different characteristics of the first display and the second display.

FIG. 10 is a block diagram illustrating a video player system constructed according to an embodiment of the present invention. The video player system 900 includes a video display 902, local storage 904, user input interface(s) 916, communication interface(s) 918, a display interface 920, processing circuitry 922, and a media drive 924 that receives the storage media 10. In this particular embodiment, the video player system 900 includes the video display 902 and the other components within a shared housing. However, in other embodiments such as video player systems 20 and 28 of FIG. 1, the video player system 900 services a video display 924 that resides in a different housing. The video display 924 may even reside in a different locale that is linked by a communication interface to the video player system 900. With the video display 924 remotely located, display interface 920 of the video player system 900 communicates with the video display 924 across a communication link.

The video player system 900 receives video data 11, sub-frame metadata 15, DRM/billing data 19, raw audio data 102, and/or audio metadata 104 from storage media 10 via its media drive 924. Alternately, the video player system 900 could receive any of the video data 11, sub-frame metadata 15, raw audio data 102, and/or audio metadata via its communication interface 918 and communications links/networks 304 from servers 218, 220 and 222. Further, the video player system 900 interacts with DRM/billing server 224 and/or player information server 316 via its communication interface 918 via communication link 304.

According to one aspect to the present invention, the media interface 924 receives a removable storage media 10. This removable storage media 10 has stored thereon both full frame video and a plurality of sub-frame metadata. The display interface 920 communicatively couples to the display 924 that has at least one display characteristic. The processing circuitry 922 selects first sub-frame metadata from the plurality of sub-frame metadata stored on storage media 10 based upon the at least one display characteristic of the display 924. The processing circuitry 922 then generates tailored video from the full frame video stored on storage media 10 using the first sub-frame metadata stored in the storage media 10. The processing circuitry 922 then delivers the tailored video to the video display 924 via the display interface 920. The processing circuitry 922 may perform post-processing pursuant to supplemental information corresponding to the video display 924 as part of this generation of the tailored video.

The video player system 900 receives user input via its user input interface 916. Processing circuitry 922 may be a general purpose processor such as a microprocessor or digital signal processor, an application specific integrated circuit, or another type of processing circuitry that is operable to execute software instructions and to process data. Local storage 904 includes one or more of random access memory, read only memory, optical drive, hard disk drive, removable storage media, or another storage media that can store instructions and data. The local storage 904 stores an operating system 906, video player software 908, video data 910, target display information 912, and encoder &/or decoder software 914. The video player software 908 includes one or more of the MC&A, IC&A &/or DC&A functionality.

In one particular operation according to the present invention, the video player system 900 receives encoded source video 12 and produces output to video display 902 or 924. The processing circuitry 922, running the video player software 908 and the encoder software 914, produces a sequence of full frames of video data from the encoded source video 12. The video player software 908 includes a sub-frame processor application that generates, by processing the sequence of full frames of video data, both a first sequence of sub-frames of video data based on first location and sizing information and a second sequence of sub-frames of video data based on second location and sizing information. The first location and sizing information and the second location of sizing information together make up the metadata 15. With this particular operation of the video player system 900, the display interface 920 delivers the first sequence and second sequence of sub-frames of video data for full frame presentation on display 902 or 924.

Similar operations may be employed using raw source video 14. Similar display metadata 16 and/or target display metadata 18 may be used with these operations. In another particular operation, the video player system 900 processes the target display information 912 to tailor the first sequence and second sequence of sub-frames of video to produce video data particularly for either the video display 902 or the video display 924.

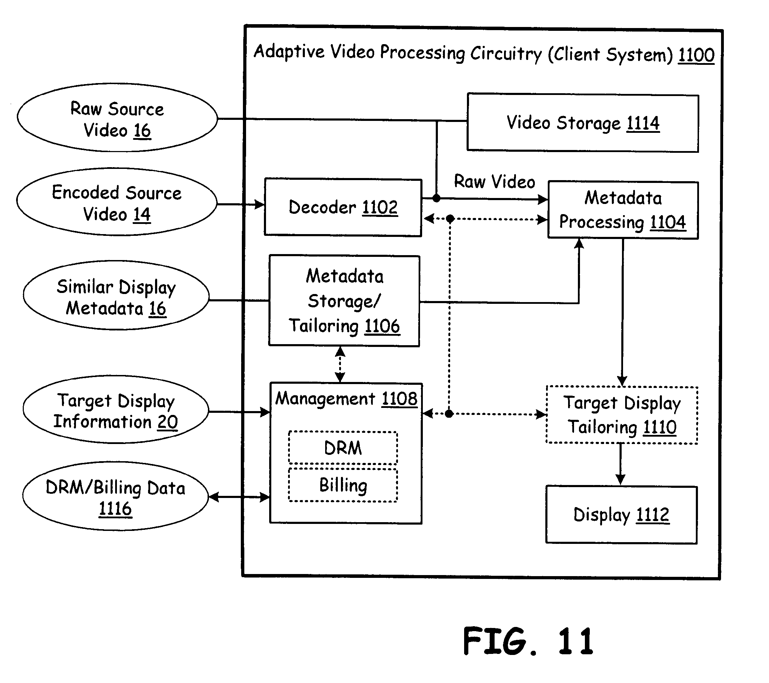

FIG. 11 is a block diagram illustrating a video player system constructed according to an embodiment of the present invention. With the particular structure of FIG. 11, the video player system 1100 includes a decoder 1102, metadata processing circuitry 1104, metadata tailoring circuitry 1106, management circuitry 1108, target display tailoring circuitry 1110, a display 1112, and video storage. The Decoder 1102 receives encoded source video 12 and produces raw video. Alternatively, the raw source video 14 may be directly provided as an input to the video player system 1100. The video storage 1014 stores the raw video 16. The management circuitry performs DRM and billing operations in addition to its other functions. The management circuitry may interface with a DRM/billing server to exchanged DRM/billing data 1116 therewith.

The management circuitry 1108 receives target display information 20 and communicatively couples within the video player system 1100 to metadata tailoring circuitry 1106, decoder 1102, metadata processing circuitry 1104, and target display tailoring circuitry 1110. The metadata tailoring circuitry 1106 receives metadata 15. Based upon input from the management circuitry 1108, the metadata tailoring circuitry 1106 modifies the metadata so that it is more particularly suited for the display 1112. In such case, the metadata 15 received by the metadata tailoring circuitry 1106 may be the similar display metadata 16 illustrated in FIG. 1. The target display information 20 includes information respective to display 1112. Based upon the target display information 20, the management circuitry 1108 provides input to metadata tailoring circuitry 1106, which the metadata tailoring circuitry 1106 uses to modify the metadata 15.

The Metadata Processing Circuitry 1104 receives the raw video, input from metadata tailoring circuitry 1106, and input from management circuitry 1108. The Metadata processing circuitry 1104 processes its inputs and produces output to target display tailoring circuitry 1110. The target display tailoring circuitry 1110 alters the input received from metadata processing circuitry 1104 and produces an output to display 1112.

In a particular operation of the video player system 1100, the decoder circuitry 1102 receives encoded source video 12 to produce a sequence of full frames of video data (raw video). The metadata Processing 1104 (pre-processing circuitry), pursuant to sub-frame information (output of metadata tailoring circuitry 1106), generates a plurality of sequences of sub-frames of video data from the sequences of full-frames of video data (raw video). The plurality of sequences of sub-frames of video data include a first sequence of sub-frames of video data that have a different point within the sequence of full-frames and video in that of a second sequence of the plurality of sequences of sub-frames of video data also produced within the metadata processing circuitry 1104. The metadata processing 1104 also assembles the first sequence of plurality of sequences of sub-frames of video data with the second sequence of plurality of sequences of sub-frames of video data to produce output to the target display tailoring circuitry 1110.

The target display tailoring circuitry 1110 (post-processing circuitry) modifies the plurality of sequences of sub-frames of video data to produce an output. The modification operations perform the target display tailoring circuitry 1110 are based upon input received from a management circuitry 1108. The input received from management circuitry 1108 by the target display tailoring circuitry 1110 is based upon target display information 20. The output produced by the target display tailoring circuitry 1110 is delivered to display 1112 for subsequent presentation.

According to operations of the present invention, the raw source video 14 and/or encoded source video 12 has a source video resolution. The source video resolution may be referred to as a first resolution. However, the plurality of sequences of sub-frames of video data produced by the metadata processing circuitry 1104 would have a second resolution that corresponds to the property of display 1112. In most cases, the second resolution would be lesser than that of the first resolution. Such would typically be the case because the size of display 1112 would be less than the size of display intended for presentation of the source video. Further, the display 1112 may have a different aspect ratio than a display intended to display source video 12 and 14. Thus, while the sequence of full-frame of video data 12 and 14 has a first aspect ratio, the output produced by metadata processing 1104 and target display tailoring circuitry 1110 would have a second aspect ratio that differs from the first aspect ratio.

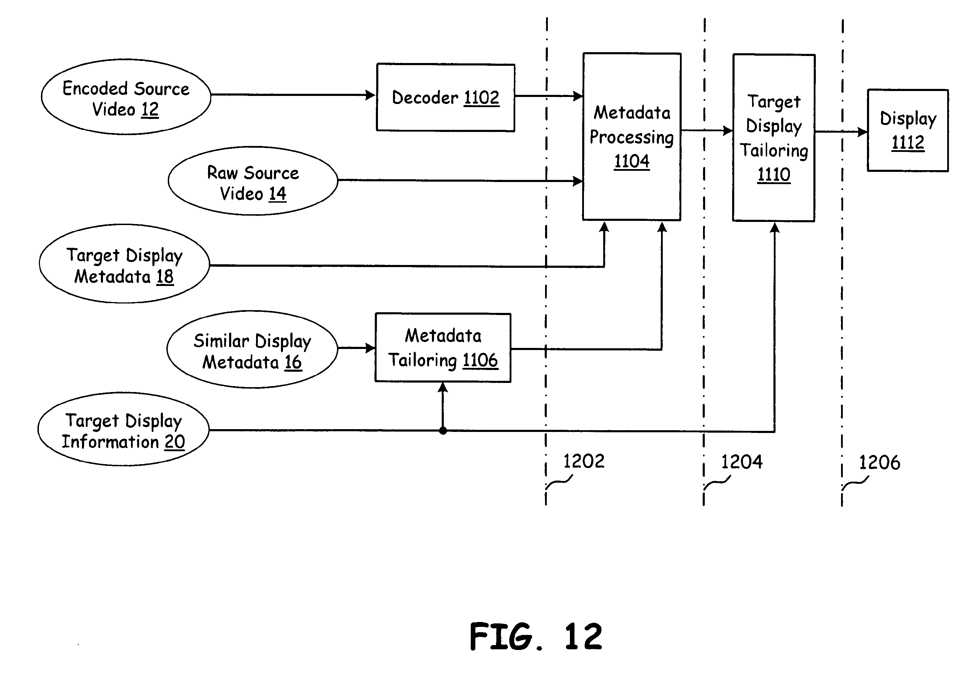

In some embodiments of the video player system 1100, components 1102 through 1112 are contained in a single housing. Alternatively, the display 1112 may be disposed in a housing separate from components 1102 through 1110. In further embodiments, the components 1102 though 1112 may be combined in/or separated in many different devices constructs. Various of these constructs will be described with references to FIGs. 12 through 15.

FIG. 12 is a schematic block diagram illustrating a first embodiment of a distributed video player system according to the present invention. With the embodiment of FIG. 12, lines of separation 1202, 1204, and 1206 of functional components of the video player system are displayed. These lines of separation 1202, 1204, and 1206 indicate a separation among distinct processing devices, distinct processing elements of a single device, and/or distinct processing operations in time. Particularly, one of the separations of 1202 separates decoder 1102 and metadata tailoring circuitry 1106 from other components of the video player circuitry. Further, the line of separation 1204 separates metadata processing circuitry 1104 from target display tailoring circuitry 1110. Further, line of separation 1206 separates target display tailoring circuitry 1110 from display 1112.

The components of FIG. 12 are similar to the components previously illustrated with reference to FIG. 11 and have retained common numbering where appropriate. With this common numbering and common functionality scheme, decoder 1102, metadata processing circuitry 1104, metadata tailoring circuitry 1106, target display tailoring circuitry 1110, and display 1112 receive same or similar inputs as those illustrated in FIG. 11 and implement or execute same in/or similar functionalities. The lines of separation 1202, 1204, and 1206 illustrate how the functions performed by the various elements 1102 through 1112 can be separated from one another in a physical sense, a logical sense, and/or a temporal sense.

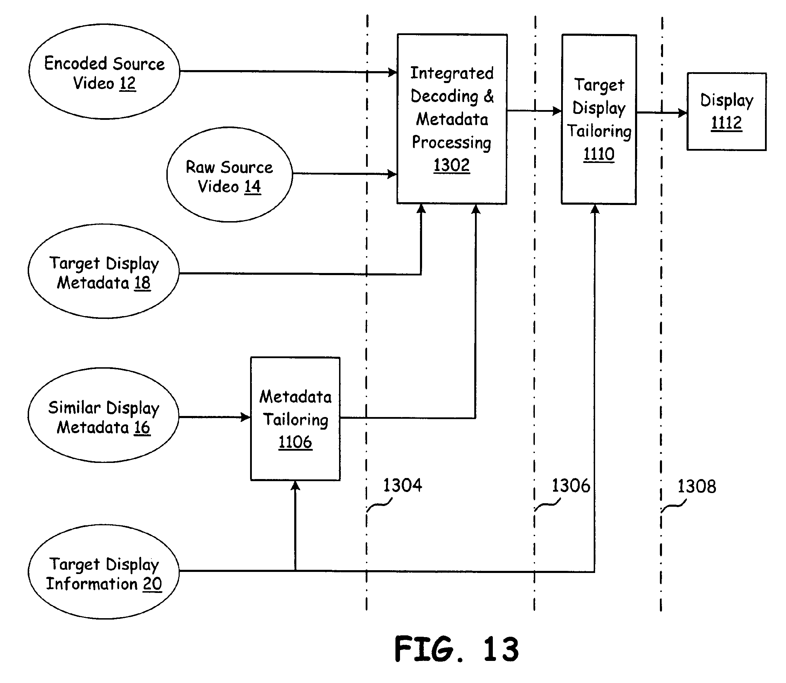

FIG. 13 is a schematic block diagram illustrating a second embodiment of a distributed video player system according to the present invention. As contrasted to the structures of FIG. 11 and FIG. 12, an integrated decoding and metadata processing circuitry 1302 performs both decoding and metadata processing operations. The integrated decoding and metadata processing circuitry 1302 receives encoded source video 12, raw source video 14, and target display metadata 18. In particular operations, the integrated decoding and metadata processing circuitry 1302 would receive one of encoded source video 12 and raw source video 14 for any particular sequence of full-frames of video data. The integrated decoding and metadata processing circuitry/functionality 1302 also receives input from the metadata tailoring circuitry 1106. The metadata tailoring functionality 1106 receives similar display metadata 16 and target display information 20. The metadata tailoring circuitry 1106 modifies similar display metadata 16 based upon target display information 20 to produce tailored metadata. The tailored metadata produced by metadata tailoring circuitry 1106 may be used in conjunction with or in lieu of the use of target display metadata 18.

The output of integrated decoding and metadata processing circuitry 1302 is received by target display tailoring circuitry 1110 that further modifies or tailors the plurality of sub-frames of video data produced by the integrated decoding and metadata processing 1302 based upon target display information 20 and produces output to display 1112. Lines of separations 1304, 110, and/or 1308 illustrate how the integrated decoding and metadata processing circuitry 1302, the target display tailoring circuitry 1110, and the display 1112 may be separated from one another in a physical sense, a logical sense, and/or a temporal sense.

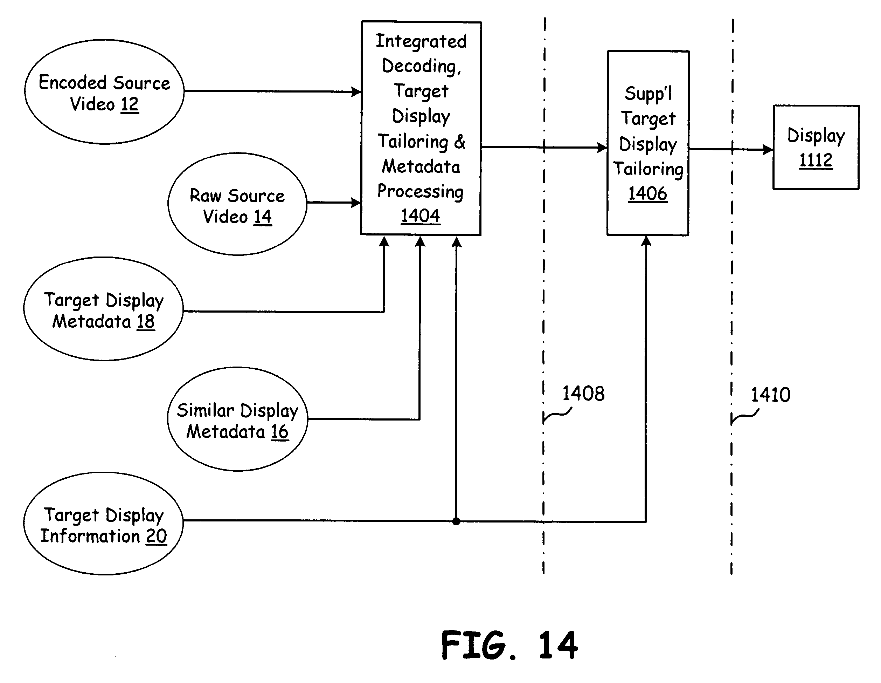

FIG. 14 is a schematic block diagram illustrating a third embodiment of a distributed video player system according to the present invention. The video player system illustrated includes integrated decoding, target display tailoring, and metadata processing circuitry 1404, supplemental target display tailoring circuitry 1406, and display 1112. The integrated decoding, target display tailoring, and metadata processing circuitry 1404 receives encoded source video 12, raw source video 14, target display metadata 18, similar display metadata 16, and/or target display information 20. Based upon the decoding of encoded source video 12 or directly from the raw source video 14, the integrated decoding, target display tailoring and metadata processing circuitry 1404 processes a sequence of full-frames of video data of the source video. Such processing is performed based upon the metadata 16 or 18 and/or the target display information 20. The integrated decoding, target display tailoring, and metadata processing circuitry 1404 produces a plurality of sequences of sub-frames of video data to the supplemental target display tailoring circuitry 1406. The supplemental target display tailoring 1406 performs additional tailoring of the plurality of sequences of sub-frames of video data based upon target display information 20. Such target tailoring includes modifying the plurality of sequences of sub-frames of video data particularly for display 1112. Lines of separation 1408, and 1410 illustrate how the integrated decoding, target display tailoring, and metadata processing circuitry 1404, the supplemental target display tailoring circuitry 1406, and the display 1202 may be separated from one another in a physical sense, a logical sense, and/or a temporal sense.

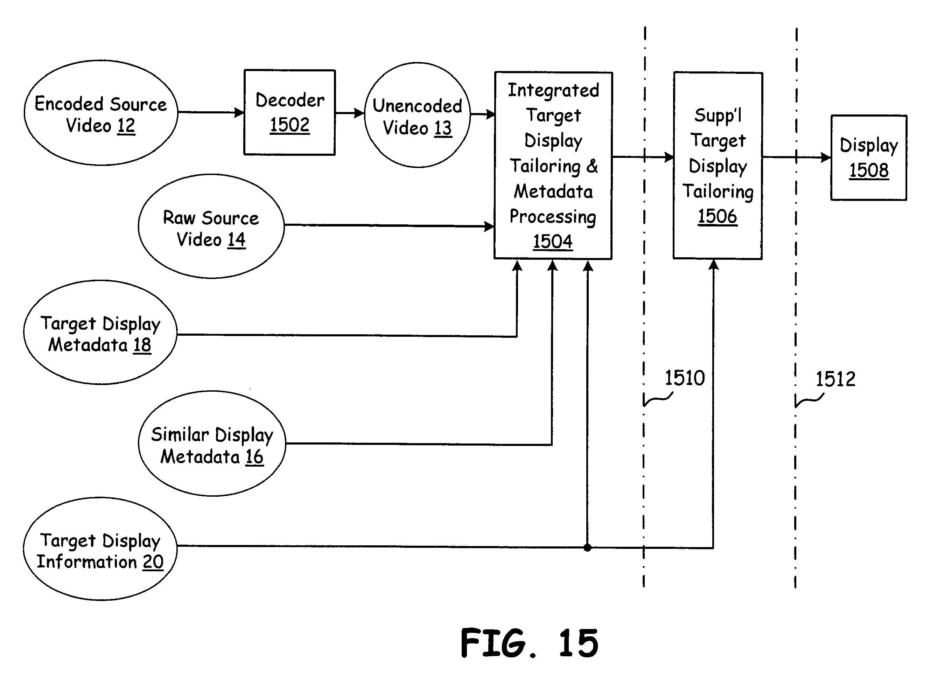

FIG. 15 is a schematic block diagram illustrating a fourth embodiment of a distributed video player system according to the present invention. Decoder 1502 receives encoded source video 12 and produces unencoded video 13. The unencoded video 13 and/or raw source video 14 is received and processed by integrated target display tailoring and metadata processing circuitry 1504. The integrated target display tailoring and metadata processing circuitry 1504 further receives target display metadata 18, similar display metadata 16, and/or target display information 20. The unencoded video 13 or raw source video 14 include a sequence of full-frames of video data. The integrated target display tailoring and metadata processing circuitry 1504 processes the sequence of full-frames of video data based upon one or more the target display metadata 18, the similar display metadata 16, and the target display information 20 to produce a plurality of sequences of sub-frames of video data to supplemental target display tailoring circuitry 1506. The supplemental target display tailoring circuitry 1506 modifies the plurality of sequences of sub-frames of video data based upon the target display information 20 to produce an output that is tailored to display 1508. The display 1508 receives the output of supplemental target display tailoring 1506 and displays the video data content contained therein.

The functions of blocks 1504, 1506, and 1508 may be separated from one another functionality, physically, and /or temporally. For example, in one embodiment, decoder 1502 and integrated target display tailoring and metadata processing circuitry 1504 may be executed by a single processing device. With this embodiment, the supplemental target display tailoring circuitry 1506 may be included with the display 1508.

In other embodiments, blocks 1502, 1504, 1506, and 1508 may reside within differing housings, within different locations, may be executed by different functional elements, and/or may be executed at differing times. Thus, lines 1510 and 1512 may represent physical boundaries, functional boundaries, and/or temporal boundaries.

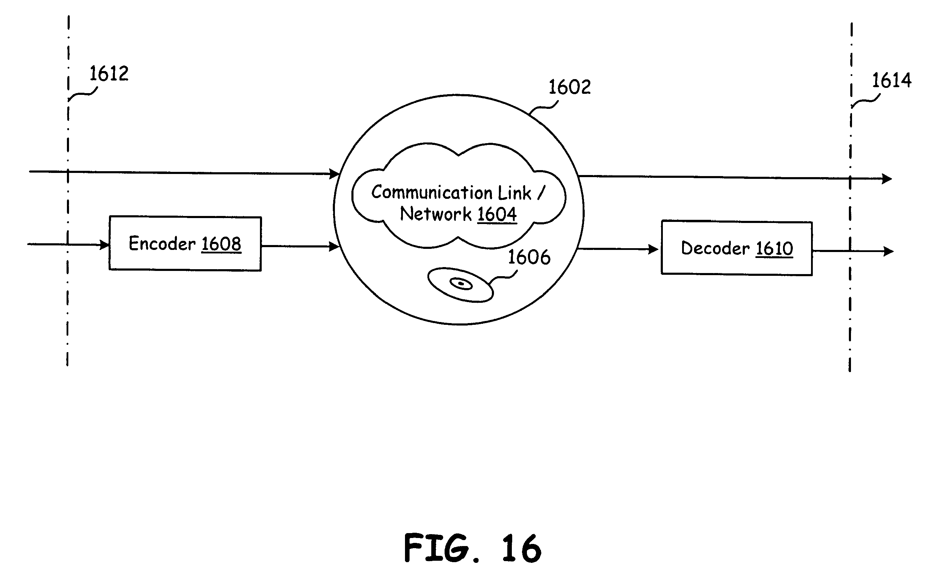

FIG. 16 is a system diagram illustrating techniques for transferring video data, metadata, and other information within a distributed video player system according to the present invention. The manner in which the various components of FIGs. 12 through 15 are coupled is shown in FIG. 16. Communication transfer 1602 may include a communication link/network connection 1604 and/or a physical storage media 1606. Lines of demarcation 1612 and 1614 may comprise any of lines demarcation 1202 through 1206, 1304 through 1308, 1408 through 1410, and/or 1510 through 1512. In such case, information passes across these lines via the communication link/network 1604 or media 1606.

With one particular operation, data is transferred in an unencoded format. However, in another embodiment, the information is encoded by encoder 1608, transferred via communication link/network connection 1604, and then decoded by decoder 1610 prior to subsequent processing.

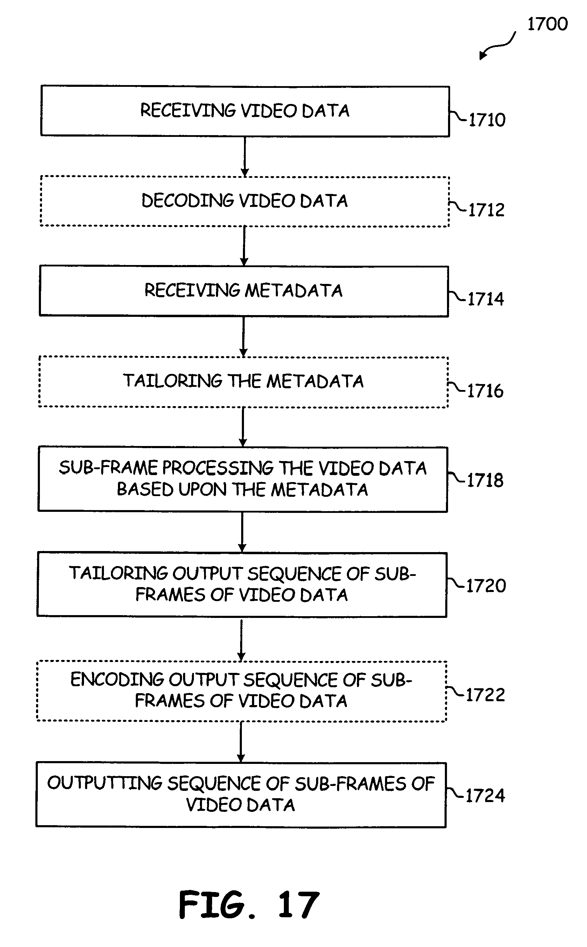

FIG. 17 is a flow chart illustrating a process for video processing and playback according to an embodiment of the present invention. Operations 1700 of video processing circuitry according to the present invention commence with receiving video data (Step 1710). When the video data is received in an encoded format, the video processing circuitry decodes the video data (Step 1712). The video processing circuitry then receives metadata (Step 1714). This metadata may be general metadata as was described previously herein, similar metadata, or tailored metadata. When similar metadata or general metadata is received, the operation of FIG. 17 includes tailoring the metadata (Step 1716) based upon target display information. Step 1716 is optional.

Then, operation of FIG. 17 includes sub-frame processing the video data based upon the metadata (Step 1718). Then, operation includes tailoring an output sequence of sub-frames of video data produced at Step 1718 based upon target display information 20 (Step 1720). The operation of Step 1720 produces a tailored output sequence of sub-frames of video data. Then, this output sequence of sub-frames of video data is optionally encoded (Step 1722). Finally, the sequence of sub-frames of video data is output to storage, output to a target device via a network, or output in another fashion or to another locale (Step 1724).

According to one particular embodiment of FIG. 17, a video processing system receives video data representative of a sequence of full frames of video data. The video processing system then sub-frame processes the video data to generate both a first sequence of sub-frames of video data and a second sequence of sub-frames of video data. The first sequence of sub-frames of video data is defined by at least a first parameter, the second sequence of sub-frames of video data is defined by at least a second parameter, and the at least the first parameter and the at least the second parameter together comprise metadata. The video processing system then generates a third sequence of sub-frames of video data by combining the first sequence of sub-frames of video data with the second sequence of sub-frames of video data.

With this embodiment, the first sequence of sub-frames of video data may correspond to a first region within the sequence of full frames of video data and the second sequence of sub-frames of video data may correspond to a second region within the sequence of full frames of video data, with the first region different from the second region.

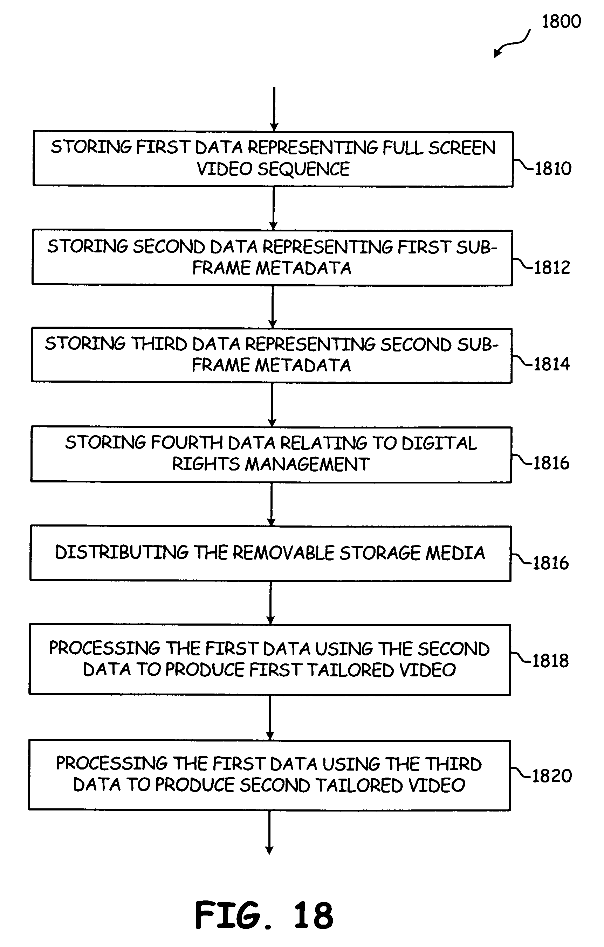

FIG. 18 is a flow chart illustrating a method associated with a removable storage media according to an embodiment of the present invention. The method 1800 of FIG. 18 commences with storing first data representing a full screen video sequence (Step 1810). This full screen video sequence may correspond to the raw video data captured by camera 110 of FIG. 4, for example. Operation continues with storing second data representing first sub-frame metadata (Step 1812). The second data is for use in producing first tailored video from the first data. The first sub-frame metadata defines both a first sub-frame within the full screen video sequence and a second sub-frame within the full frame video sequence. The first sub-frame has at least one characteristic that differs from that of the second sub-frame. Operation continues with storing third data representing second sub-frame metadata (Step 1814). Further, operation may include storing fourth data relating to digital rights management (Step 1816). Then, operation includes distributing the removable storage media (Step 1816). As has been previously described herein, the removable storage media may comprise of an optical media such as a DVD, read-only memory, random access memory, or another type of memory device capable of storing digital information.

The operation 1800 of FIG. 18 may also include processing the first data using the second data to produce first tailored video (Step 1818). Operation 1800 may further include processing the first data using the third data to produce second tailored video (Step 1820). The processing operations of Steps 1818 and 1820 may be performed by different video player systems. Alternatively, a video player system that services more than one display may perform the operations of both Step 1818 and 1820.

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled."

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A removable storage media that may be received by and interact with both a first video player system and a second video player system, the first video player system having a first video display that has a first display characteristic, the second video player system having a second video display that has a second display characteristic, the first display characteristic being different from the second display characteristic, the removable storage media comprising:
a plurality of storage locations;
a sequence of full frames of video data stored in at least a first of the plurality of storage locations;
first sub-frame metadata, generated to accommodate at least the first display characteristic, that is stored in at least a second of the plurality of storage locations;
the first sub-frame metadata defines a first plurality of sub-frames within the sequence of full frames of video data, each of the first plurality of sub-frames having at least a first parameter that differs from that of the other of the first plurality of sub-frames;
second sub-frame metadata, generated to accommodate at least the second display characteristic, that is stored in at least a third of the plurality of storage locations; and
the second sub-frame metadata defines a second plurality of sub-frames within the sequence of full frames of video data, each of the second plurality of sub-frames having at least a second parameter that differs from that of the other of the second plurality of sub-frames.

2. The removable storage media of claim 1, wherein:
the first sub-frame metadata can be retrieved and used by the first video player system to tailor the sequence of full frames of video data for the first display; and
the second frame metadata can be retrieved and used by the second video player system to tailor the sequence of full frames of video data for the second display.

3. The removable storage media of claim 1, wherein the first parameter comprising a sub-frame center point within the sequence of full frames of video data.

4. The removable storage media of claim 1, wherein the first video player system comprising a television, and the second video player system comprising a computer.

5. The removable storage media of claim 1, wherein the first video display comprising a display of a hand-held device.

6. Video player circuitry comprising:
media interface that receives a removable media, the removable media having stored thereon both full frame video and a plurality of sub-frame metadata;
interface circuitry communicatively coupled to a display having at least one display characteristic;
processing circuitry that selects first sub-frame metadata from the plurality of sub-frame metadata based upon the at least one display characteristic;
the processing circuitry generates tailored video from the full frame video using the first sub-frame metadata; and
the processing circuitry delivers the tailored video via the interface circuitry.

7. The video player circuitry of claim 6, wherein the processing circuitry performs post-processing pursuant to supplemental information as part of the generation of the tailored video.

8. The video player circuitry of claim 6, wherein the video player circuitry and the display are disposed in a single housing.

9. A method associated with a removable storage media, the method comprising:
storing first data representing a full screen video sequence;
storing second data representing first sub-frame metadata, the second data for use in producing first tailored video from the first data, the first sub-frame metadata defining both a first sub-frame within the full screen video sequence and a second sub-frame with the full screen video sequence, the first sub-frame having at least one characteristic that differs from that of the second sub-frame; and
storing third data representing second sub-frame metadata, the third data for use in producing second tailored video from the first data.

10. The method of claim 9, further comprising distributing the removable storage media.
